# EUROPEAN PATENT SPECIFICATION

(11) **EP 2 022 128 B1**
(45) Date of publication and mention of the grant of the patent: **07.11.2012**
(21) Application number: 07794424.7
(22) Date of filing: 30.04.2007
(51) Int. Cl.: H01M 12/06

(54) **MOISTURE RESISTANT BARRIER FOR BATTERIES**
FEUCHTIGKEITSBESTÄNDIGE BARRIERE FÜR BATTERIEN
ÉCRAN RÉSISTANT À L'HUMIDITÉ POUR PILES

(30) Priority: 28.04.2006 US 380786
(43) Date of publication of application: 11.02.2009
(73) Proprietor: Starkey Laboratories, Inc., Eden Prairie, MN 55344 (US)
(72) Inventor: LINK, Douglas, F., Plymouth, Minnesota 55441 (US); HIGGINS, Sidney, A., Maple Grove, Minnesota 55369 (US); JACOBY, Robert, P., Plymouth, Minnesota 55442 (US)
(74) Representative: Maury, Richard Philip
(86) International application number: PCT/US2007/010423
(87) International publication number: WO 2007/127462

(56) References cited:
- EP-A- 0 108 954
- JP-A- 2 109 254
- US-A1- 2004 241 537
- US-A1- 2005 095 506

## Description

This disclosure relates to batteries, and more particularly to method and apparatus for a moisture resistant barrier for batteries.

### BACKGROUND

When batteries are exposed to moisture, the anode (positive) and negative (cathode) terminals are effectively shorted together. Depending on the battery type and the amount of conductance caused by the moisture, the battery is drained and/or destroyed due to the current draw.

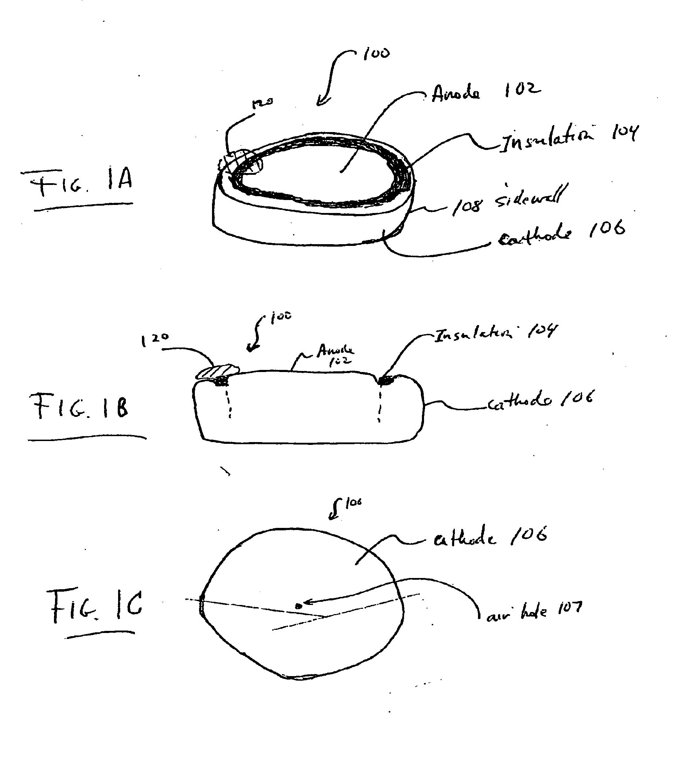

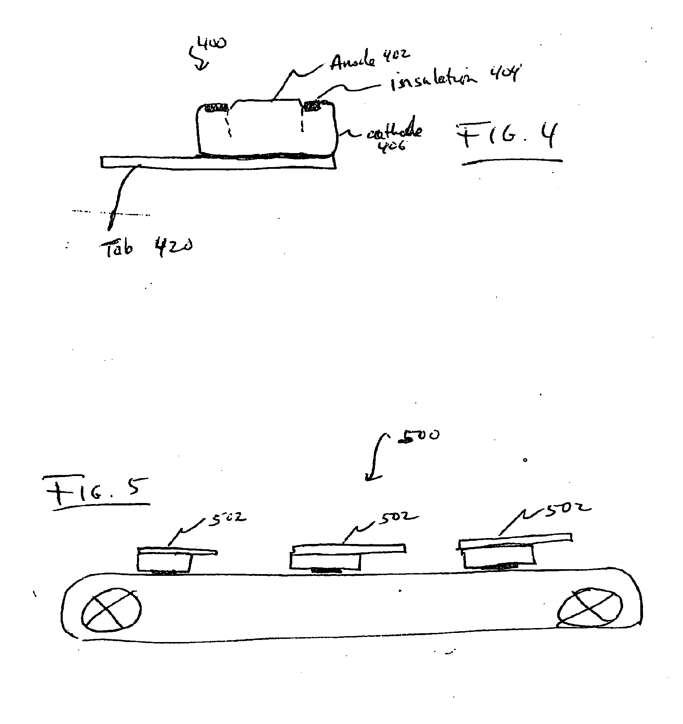

FIG. 1A shows a perspective view of a commonly found battery 100 having an anode 102 and cathode 106 separated by insulation 104. One type of battery 100 is a zinc-air battery commonly found in hearing aids. Depending on the battery design, the cathode 106 can have a conductive bottom portion and a conductive sidewall 108. Also, depending on battery design, the anode 102 may be slightly raised from the height of the cathode sidewall 108. When moisture 120 provides a conductive path between anode 102 and cathode 106, the result can be destruction of the battery 100 due to the resulting low ohmic bridge between anode and cathode. FIG. 1B is a cross section of the battery 100 of FIG. 1A. FIG. 1C shows a bottom view of the battery 100 of FIG. 1A. For air-metal battery chemistries, it is common to find an air hole 107 in the cathode 106. Such air holes are typically covered to inhibit battery chemistry reactions until such time as the battery is put in service. One such approach is to use a foil tab adhered to the cathode to seal the air hole, such as the tab 420 shown in FIG. 4. The battery 100 shown herein is just one of many conventional cell configurations known to those of skill in the art.

When battery 100 is destroyed by moisture, the device housing the battery 100 is frequently damaged or destroyed. Therefore, there is a need in the art for preventing moisture from damaging batteries and the devices that house them. The system should be straightforward to implement and should accommodate a variety of battery designs.
The present invention is a method as defined in claim 1, and apparatus as defined in claim 14.

The above-mentioned problems and others not expressly discussed herein are addressed by the present subject matter and will be understood by reading and studying this specification.

The present invention can effectively increase the insulated separation between the anode and cathode contact surfaces of the battery. This increase in effective separation between anode and cathode decreases the probability that moisture applied to the battery will cause substantial ohmic conductivity between the anode and the cathode. Consequently, fewer batteries will be prematurely depleted or destroyed by moisture and fewer devices holding those batteries will need repair. The present subject matter serves to prevent or eliminate discharge of corrosive battery chemicals due to moisture and operating in wet environments. The life of batteries and devices using the present subject matter is thus extended.

This Summary is an overview of some of the teachings of the present application and not intended to be an exclusive or exhaustive treatment of the present subject matter. Further details about the present subject matter are found in the detailed description and appended claims. Other aspects will be apparent to persons skilled in the art upon reading and understanding the following detailed description and viewing the drawings that form a part thereof, each of which are not to be taken in a limiting sense. The scope of the present invention is defined by the appended claims and their legal equivalents.

### BRIEF DESCRIPTION OF THE DRAWINGS

FIGS. 1A-1C show a perspective view, a side view, and a bottom view, respectively, of a commonly found battery 100 having an anode 102 and cathode 106 separated by insulation 104.

FIGS. 2A-2C show a perspective view, a side view, and a bottom view, respectively, of a battery according to one embodiment of the present subject matter.

FIGS. 3A-3C show a perspective view, a side view, and a bottom view, respectively, of a battery according to one embodiment of the present subject matter.

FIG. 4 shows a tab adhered to a battery to facilitate storage, and handling.

FIG. 5 shows a process line for applying insulating layers according to teachings set forth herein.

### DETAILED DESCRIPTION

The following detailed description of the present subject matter refers to subject matter in the accompanying drawings which show, by way of illustration, specific aspects and embodiments in which the present subject matter may be practiced. These embodiments are described in sufficient detail to enable those skilled in the art to practice the present subject matter. References to "an", "one", or "various" embodiments in this disclosure are not necessarily to the same embodiment, and such references contemplate more than one embodiment. The following detailed description is demonstrative and not to be taken in a limiting sense. The scope of the present subject matter is defined by the appended claims, along with the full scope of legal equivalents to which such claims are entitled.

The present subject matter relates to method and apparatus for preventing moisture from damaging batteries and the devices that use them.

As stated herein, FIGS. 1A-1C show various views of a commonly found battery. Although this description will use this example of a battery to demonstrate the present subject matter, it is understood that the present teachings may be applied to different cell configurations.

In various embodiments, an insulating layer is applied to the battery to effectively increase the insulated separation between anode and cathode of the battery that external moisture would experience when applied to the battery. This increase in effective separation between anode and cathode decreases the probability that moisture applied to the battery will cause substantial ohmic conductivity between the anode and the cathode. Consequently, fewer batteries will be prematurely depleted or destroyed by moisture and fewer devices holding those batteries will need repair. The present subject matter serves to prevent or eliminate discharge of corrosive battery chemicals due to moisture and operating in wet environments. The life of batteries and devices using the present subject matter is thus extended.

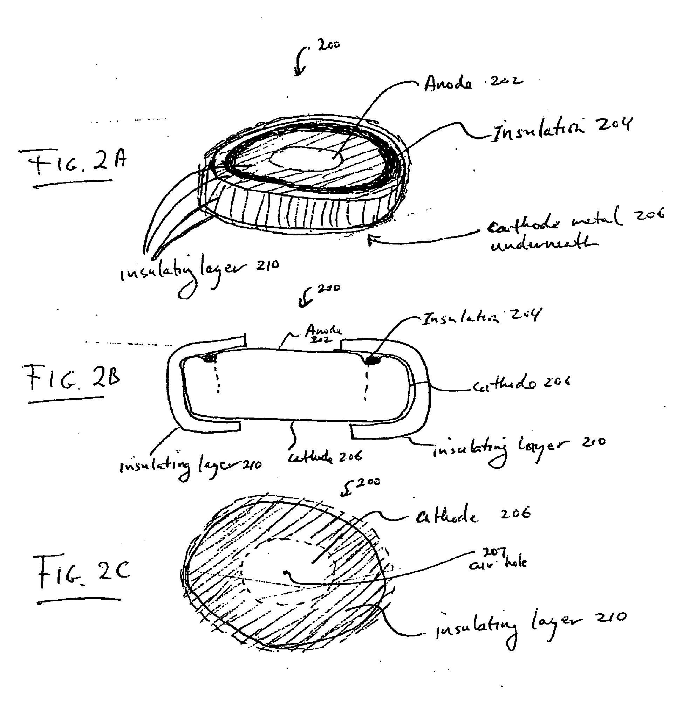

FIGS. 2A-2C show a perspective view, a side view, and a bottom view, respectively, of a battery 200 according to one embodiment of the present subject matter. An insulating layer 210 is applied to the top and side portions of the battery 200. In this embodiment, the insulating layer 210 overlaps the anode 202 and extends to cover the cathode material near the top of the battery 200 and along the sidewall of the battery. In some embodiments, the insulating layer extends also to the bottom portion as shown in the cross sectional drawing FIG. 2B. An insulating layer, such as is shown in FIG. 2B can extend the effective insulated separation between anode and cathode to distances much greater than that afforded by the insulation 204.

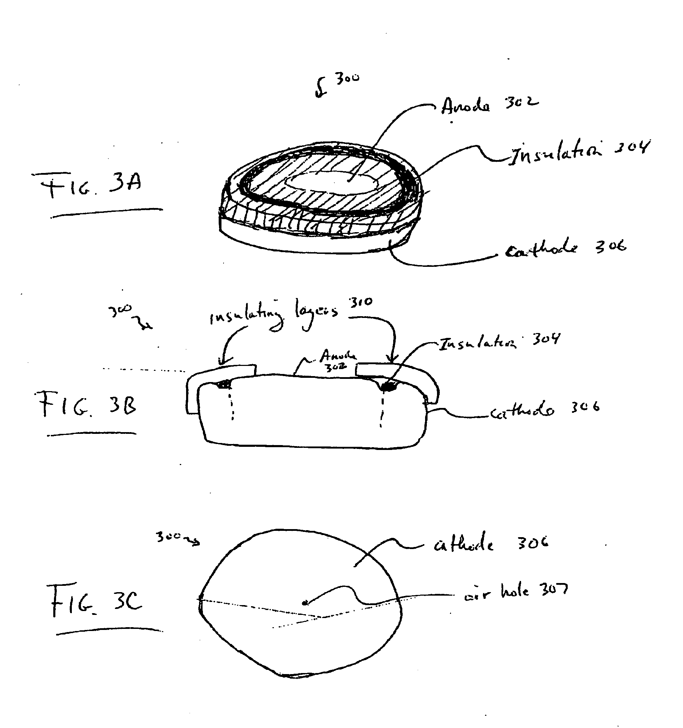

Other insulating layers can be used having different geometries and coverages without departing from the scope of the present subject matter. Such different insulating layers are demonstrated by FIGS. 3A-3C, which show a perspective view, a side view, and a bottom view, respectively, of a battery 300 according to one embodiment of the present subject matter. In this example, the insulating layer 310 covers a portion of the anode 302 and only a portion of the sidewall of cathode 306. The layer need not extend to the bottom of battery 300, as was demonstrated by FIGS. 2A-2C. These examples are intended to demonstrate the variations possible with the present subject matter and are not intended to be exclusive or exhaustive examples.

It is understood that other insulating layers having different geometries and coverages are contemplated by this subject matter. For example, the insulating layer may cover a portion of the anode 302 and not the cathode 306, thereby extending the effective insulating distance of the insulation 304. For another example, the insulating layer may cover a portion of the cathode 306 and not the anode 302, thereby extending the effective insulating distance of the insulation 304 between the anode 302 and cathode 306. It is understood that in either of these variations, the insulating layer is most effective when it begins on or adjacent to the region of insulation 304 to increase the effective insulating distance between cathode 302 and anode 306.

In the designs set forth herein, it is understood that the insulating layer should not cover air holes provided by the battery design. Thus, in FIGS. 2C and 3C, it is understood that air holes 207 and 307, respectively, are not to be covered by the insulating layer. In some embodiments, masking of the air hole is straightforward since some battery packing approaches already employ an adhesive metal tab which covers the air hole to facilitate storage of the cell without promoting cell chemistries to begin until the tab is removed for use of the battery. This adhesive metal tab can serve as a mask to prevent the application of insulation front blocking the hole. FIG. 4 shows such a tab which is typically adhered to a cathode of a battery to facilitate storage and handling, and which blocks the air hole until the battery is to be used.

In the designs set forth herein it is beneficial to avoid insulation of a portion of the cathode and a portion of the anode to avoid disruption of connections to the devices which use the present battery. Thus, a connection area on both the anode and cathode is maintained to facilitate connections to the device using the battery. The insulating approaches herein can be tailored to facilitate connections to the devices employing the battery. For instance, in designs where a side contact is used, the approach of FIG. 3A-3C is preferred over that of FIGS. 2A-2C. Other embodiments may employ connecting members which "scratch" any insulation off of the contact area of the battery. Thus, there are a number of variations possible with the teachings set forth herein.

The insulating layer can be a number of different insulating materials of different thicknesses and compositions. It is understood that battery compartments of many devices employ compact designs that use force on the contacts to make electrical connection. Thus, for devices which conserve space it is beneficial to use very thin insulating layers to allow the battery to fit within the existing battery compartment and to make contact with existing contacts.

The insulating layer can be applied at different times in various embodiments. In one embodiments the substance is applied prior to metal forming. In one embodiment the substance is applied after the battery is formed. The insulating layer can be applied directly to the metal of the battery anode and/or cathode in various embodiments. In applications using existing battery designs, it is possible to put the insulating layer on a standard battery design. This approach is not limited to past battery designs, but may also be employed on existing and future battery designs, whether standard or custom.

The insulating layer can be comprised of one or more of several substances as long as the substance is electrically insulating. In one embodiment, the substance is a selectively applied insulating polymer. In various embodiments, butyl acetate with PTFE, known as Teflon (Registered Trade Mark) (akin to a nail enamel top coat) can be applied in a thin layer to provide the insulating layer.

In various embodiments, the insulating layer is comprised of parylene formed using a parylene coating process. In various embodiments, a chemical vapor deposition process is used to deposit the insulating layer. In various embodiments, a dipping process is used to provide the insulating layer. In various embodiments, the insulating layer is sprayed on. In various embodiments, the insulating layer is painted on. Such processes may be automated in certain embodiments. In certain embodiments, such processes may be performed manually.

Various masks may be employed to place the insulating layer on certain portions of the battery and leave certain other portions uncoated. The mask materials can be any of a number of tape or other adhesives. Other materials,such as the tab 420 of FIG. 4 can be used as a mask. Such uses include masking the area of the air hole of the battery to ensure that it is not occluded by insulative layer for proper operation of the battery.

FIG. 5 shows a process line for applying insulating layers according to teachings set forth herein. The insulative layer can be placed on batteries 502 as set forth herein in a mass production process.

The method and apparatus set forth herein are demonstrative of the principles of the invention, and it is understood that other method and apparatus are possible using the principles described herein.

Other battery-powered devices beyond those listed herein are contemplated as well.

CONCLUSION

This application is intended to cover adaptations or variations of the present subject matter. It is to be understood that the above description is intended to be illustrative, and not restrictive. Thus, the scope of the present subject matter is determined by the appended claims and their legal equivalents.

## Claims

1. A method of increasing the moisture resistance of a battery having external electrical anode (202) and cathode (206) contact surfaces separated by an external insulating layer (204) having an effective insulating distance,
comprising masking one or more portions of the external surface of the battery, and using the mask to apply a further electrically-insulating layer (210, 310) to unmasked portions of the external surface of the battery including a portion of at least one of said contact surfaces, extending the effective insulating distance of the external insulating layer (204) to increase the electrical resistance between the contact surfaces that there would be in the event of exposure of the external surface to moisture.

2. The method of claim 1, wherein the applying includes:
forming the insulating layer using a parylene process.

3. The method of claim 1, wherein the applying includes:
forming the insulating layer using a chemical vapor deposition process.

4. The method of claim 1, wherein the applying includes:
forming the insulating layer using a dipping process.

5. The method of claim 1, wherein the applying includes:
forming the insulating layer using a spraying process.

6. The method of claim 1, wherein the applying includes:
forming the insulating layer using a painting process.

7. The method of claim 1, wherein the further electrically-insulating layer includes an insulating polymer.

8. The method of claim 1, wherein the further electrically-insulating layer includes butyl acetate with PTFE, Teflon, Registered Trade Mark.

9. The method of claim 1, wherein the further electrically-insulating layer includes parylene.

10. The method of any of the preceding claims, wherein applying an insulating layer includes applying the insulating layer so as to avoid covering an air hole (107) of the battery.

11. The method of claim 10, wherein the masking comprises adhering a removable tab (420) to one of the contact surfaces to cover the air hole of the battery.

12. The method of any of the preceding claims, comprising forming the insulating layer over an anode of the battery.

13. The method of any of the preceding claims, comprising forming the insulating layer over a cathode of the battery.

14. A battery having external electrical anode (202) and cathode (206) contact surfaces separated by an external insulating layer (204) having an effective insulating distance, the battery comprising a further electrically-insulating layer (210, 310) covering portions of the external surface of the battery including a portion of at least one of said contact surfaces, the further electrically-insulating layer extending the effective insulating distance of the external insulating layer (204) such that the electrical resistance between the contact surfaces that there would be in the event of exposure of the external surface to moisture is increased.

15. A battery according to claim 14, comprising at least one air hole (307), wherein the electrically-insulating layer does not cover the air hole.

16. A battery according to claim 14 or 15, wherein the further electrically-insulating layer includes an insulating polymer.

## Patentansprüche

1. Verfahren zum Erhöhen der Feuchtigkeitsbeständigkeit einer Batterie, die externe elektrische Anoden- (202) und Kathoden- (206) Kontaktoberflächen aufweist, die durch eine externe Isolierschicht (204) getrennt sind, die einen wirksamen Isolierabstand aufweist,
umfassend das Maskieren eines oder mehrerer Abschnitte der externen Oberfläche der Batterie und das Verwenden der Maske, um eine weitere elektrisch isolierende Schicht (210, 310) auf die unmaskierten Abschnitte der externen Oberfläche der Batterie, einschließlich eines Abschnitts von mindestens einer der Kontaktoberflächen aufzubringen, das Vergrößern des wirksamen Isolierabstands der externen Isolierschicht (204), um den elektrischen Widerstand zwischen den Kontaktoberflächen zu erhöhen, der im Falle des Aussetzens der externen Oberfläche an Feuchtigkeit auftreten würde.

2. Verfahren nach Anspruch 1, wobei das Aufbringen Folgendes umfasst:
das Bilden der Isolierschicht unter Anwendung eines Parylenverfahrens.

3. Verfahren nach Anspruch 1, wobei das Aufbringen Folgendes umfasst:
das Bilden der Isolierschicht unter Anwendung eines chemischen Gasphasenabscheidungsverfahrens.

4. Verfähren nach Anspruch 1, wobei das Aufbringen Folgendes umfasst:
das Bilden der Isolierschicht unter Anwendung eines Tauchverfahrens.

5. Verfahren nach Anspruch 1, wobei das Aufbringen Folgendes umfasst:
das Bilden der Isolierschicht unter Anwendung eines Sprühverfahrens.

6. Verfähren nach Anspruch 1, wobei das Aufbringen Folgendes umfasst:
das Bilden der Isolierschicht unter Anwendung eines Lackierverfahrens.

7. Verfahren nach Anspruch 1, wobei die weitere elektrisch isolierende Schicht ein isolierendes Polymer umfasst.

8. Verfahren nach Anspruch 1, wobei die weitere elektrisch isolierende Schicht ein Butylacetat mit PTFE, Teflon, eingetragenes Warenzeichen, umfasst.

9. Verfahren nach Anspruch 1, wobei die weitere elektrisch isolierende Schicht Parylen umfasst.

10. Verwahren nach einem der vorhergehenden Ansprüche, wobei das Aufbringen einer Isolierschicht das Aufbringen der Isolierschicht derart umfasst, dass das Bedecken eines Luftlochs (107) der Batterie vermieden wird.

11. Verfahren nach Anspruch 10, wobei das Maskieren das Befestigen einer entfernbaren Lasche (420) auf einer der Kontaktoberflächen umfasst, um das Luftloch der Batterie zu bedecken.

12. Verfahren nach einem der vorhergehenden Ansprüche, umfassend das Bilden der Isolierschicht über eine Anode der Batterie.

13. Verfahren nach einem der vorhergehenden Ansprüche, umfassend das Bilden der Isolierschicht über eine Kathode der Batterie.

14. Batterie, die externe elektrische Anoden- (202) und Kathoden- (206) Kontaktoberflächen aufweist, die durch eine externe Isolierschicht (204) getrennt sind, die einen wirksamen Isolierabstand aufweist, wobei die Batterie eine weitere elektrisch isolierende Schicht (210, 310) umfasst, die Abschnitte der externen Oberfläche der Batterie, einschließlich eines Abschnitts von mindestens einer der Kontaktoberflächen bedeckt, wobei die weitere elektrisch isolierende Schicht den wirksamen Isolierabstattd der externen Isolierschicht (204) derart erhöht, dass der elektrische Widerstand zwischen den Kontaktfläche, der im Falle des Aussetzens der externen Oberfläche an Feuchtigkeit bestehen würde, erhöht wird.

15. Batterie nach Anspruch 14, umfassend mindestens ein Luftloch (307), wobei die elektrisch isolierende Schicht das Luftloch nicht bedeckt.

16. Batterie nach Anspruch 14 oder 15, wobei die weitere elektrisch isolierende Schicht ein isolierendes Polymer umfasst.

## Revendications

1. Procédé d'augmentation de la résistance à l'humidité d'une pile ayant des surfaces de contact électrique externe de l'anode (202) et de la cathode (206) séparées par une couche d'isolation externe (204) ayant une distance d'isolation efficace,
comprenant le masquage d'une ou plusieurs portion(s) de la surface externe de la pile, et d'utilisation du masque pour appliquer une couche électriquement isolante supplémentaire (210, 310) aux portions non masquées de la surface externe de la pile incluant une portion d'au moins l'une desdites surfaces de contact, prolongeant la distance d'isolation efficace de la couche d'isolation externe (204) pour accroître la résistance électrique entre les surfaces de contact en cas d'événement d'exposition de la surface externe à l'humidité.

2. Procédé selon la revendication 1, dans lequel l'application inclut :
la formation de la couche d'isolation en utilisant un procédé au parylène.

3. Procédé selon la revendication 1, dans lequel l'application inclut :
la formation de la couche d'isolation en utilisant un procédé de dépôt de substance chimique en phase vapeur.

4. Procédé selon la revendication 1, dans lequel l'application inclut :
la formation de la couche d'isolation en utilisant un processus d'immersion.

5. Procédé selon la revendication 1, dans lequel l'application inclut :
la formation de la couche d'isolation en utilisant un procédé de pulvérisation.

6. Procédé selon la revendication 1, dans lequel l'application inclut :
la formation de la couche d'isolation en utilisant un procédé de peinture.

7. Procédé selon la revendication 1, dans lequel la couche électriquement isolante supplémentaire inclut un polymère isolant.

8. Procédé selon la revendication 1, dans lequel la couche électriquement isolante supplémentaire inclut de l'acétate de butyle avec du PTFE, Téflon, marque enregistrée.

9. Procédé selon la revendication 1, dans lequel la couche électriquement isolante supplémentaire inclut du parylène.

10. Procédé selon l'une quelconque des revendications précédentes, dans lequel l'application d'une couche isolante comprend l'application de la couche isolante afin d'éviter le recouvrement d'un trou d'aération (107) de la pile.

11. Procédé selon la revendication 10, dans lequel le masquage comprend l'adhésion d'un onglet amovible (420) au niveau d'une des surfaces de contact pour recouvrir le trou d'aération de la pile.

12. Procédé selon l'une quelconque des revendications précédentes, comprenant la formation de la couche d'isolation sur une anode de la pile.

13. Procédé selon l'une quelconque des revendications précédentes, comprenant la formation de la couche d'isolation sur une cathode de la pile.

14. Pile ayant des surfaces de contact électrique externe d'anode (202) et de cathode (206) séparées par une couche d'isolation externe (204) ayant une distance d'isolation efficace, la pile comprenant une couche électriquement isolante supplémentaire (210, 310) recouvrant des portions de la surface externe de la pile, incluant une portion d'au moins l'une desdites surfaces de contact, la couche électriquement isolante supplémentaire prolongeant la distance d'isolation efficace de la couche d'isolation externe (204) de sorte que la résistance électrique entre les surfaces de contact qui surviendrait en cas d'événement d'exposition de la surface externe à l'humidité soit accrue.

15. Pile selon la revendication 14, comprenant au moins un trou d'aération (307), dans laquelle la couche électriquement isolante ne recouvre pas le trou d'aération.

16. Pile selon la revendication 14 ou 15, dans laquelle la couche électriquement isolante supplémentaire inclut un polymère isolant.
